# EUROPEAN PATENT SPECIFICATION

(11) **EP 3 516 508 B1**
(45) Date of publication and mention of the grant of the patent: **15.07.2020**
(21) Application number: 17765047.0
(22) Date of filing: 01.09.2017
(51) Int. Cl.: G06F 9/38

(54) **MEMORY VIOLATION PREDICTION**
VORHERSAGE VON SPEICHERVERSTÖSSEN
PRÉDICTION DE VIOLATION DE MÉMOIRE

(30) Priority: 22.09.2016 US 201615273182
(43) Date of publication of application: 31.07.2019
(73) Proprietor: Qualcomm Incorporated, San Diego, CA 92121-1714 (US)
(72) Inventor: KOTHINTI NARESH, Vignyan Reddy, San Diego California 92121-1714 (US); KRISHNA, Anil, San Diego California 92121-1714 (US); WRIGHT, Gregory Michael, San Diego California 92121-1714 (US)
(74) Representative: Tomkins & Co
(86) International application number: PCT/US2017/049874
(87) International publication number: WO 2018/057274

(56) References cited:
- EP-A1- 2 660 716
- EP-A1- 2 819 004
- US-A1- 2002 124 156

## Description

### BACKGROUND

### 1. Field of the Disclosure

The present disclosure relates to a memory violation prediction.

### 2. Description of the Related Art

Processors provide load and store instructions to access information located in the processor caches (e.g., LI, L2, etc.) and/or main memory. A load instruction may include a memory address (provided directly in the load instruction or using an address register) and identify a target register. When the load instruction is executed, data stored at the memory address may be retrieved (e.g., from a cache, from main memory, or from another storage mechanism) and placed in the identified target register. Similarly, a store instruction may include a memory address and an identifier of a source register. When the store instruction is executed, data from the source register may be written to the memory address. Load instructions and store instructions may utilize data cached in the L1 cache.

A processor may utilize instruction level parallelism (ILP) to improve application performance. Out-of-order execution is a frequently utilized technique to exploit ILP. In out-of-order execution, instructions that are ready to execute are identified and executed, often out of the program order as specified by the von-Neumann programing model. This can result in memory operations, such as loads and stores, to be executed in an out-of-order fashion. For example, an "older" store instruction may not be ready to execute until after a "younger" load instruction has executed, for reasons of data and address computation latency earlier in the program. An "older" instruction is an instruction that occurs earlier in the program order than a "younger" instruction.

A younger instruction may depend on an older instruction. For example, both instructions may access the same memory address or the younger instruction may need the result of the older instruction. Thus, continuing the example above, the younger load instruction may depend on the older store instruction being executed first, but due to the latency earlier in the program execution, the older store instruction does not execute before the younger load instruction executes, causing an error.

To resolve such an error, the executed load instruction and the subsequently issued instructions are flushed from the pipeline and each of the flushed instructions is reissued and re-executed. While the load instruction and subsequently issued instructions are being invalidated and reissued, the L1 cache may be updated with the data stored by the store instruction. When the reissued load instruction is executed the second time, the load instruction may then receive the correctly updated data from the L1 cache.

Executing, invalidating, and reissuing the load instruction and subsequently executed instructions after a load-store conflict may take many processor cycles. Because the initial results of the load instruction and subsequently issued instructions are invalidated, the time spent executing these instructions is essentially wasted. Thus, load-store conflicts may result in processor inefficiency. US2002124156 discloses a method for preventing memory violations, wherein subsequently issued loads are allowed to bypass unexecuted silent stores.

### SUMMARY

The following presents a simplified summary relating to one or more aspects disclosed herein. As such, the following summary should not be considered an extensive overview relating to all contemplated aspects, nor should the following summary be regarded to identify key or critical elements relating to all contemplated aspects or to delineate the scope associated with any particular aspect. Accordingly, the following summary has the sole purpose to present certain concepts relating to one or more aspects relating to the mechanisms disclosed herein in a simplified form to precede the detailed description presented below.

In an aspect, a method for preventing memory violations includes accessing, by a fetch unit from a branch predictor of a processor, a disambiguation indicator associated with a block of instructions of a program to be executed by the processor, fetching, by the fetch unit of the processor from an instruction cache, the block of instructions, and executing, by the processor, load instructions and/or store instructions in the block of instructions based on the disambiguation indicator indicating whether or not the load instructions and/or the store instructions in the block of instructions can bypass other instructions of the program or be bypassed by other instructions of the program.

In an aspect, an apparatus for preventing memory violations includes a processor, a fetch unit configured to fetch, from an instruction cache, a block of instructions of a program to be executed by the processor, and a branch predictor configured to provide a disambiguation indicator associated with the block of instructions to the processor, wherein the processor is configured to execute load instructions and/or store instructions in the block of instructions based on the disambiguation indicator indicating whether or not the load instructions and/or the store instructions in the block of instructions can bypass other instructions of the program or be bypassed by other instructions of the program.

In an aspect, an apparatus for preventing memory violations includes a means for processing, a means for fetching configured to fetch, from an instruction cache, a block of instructions of a program to be executed by the processor, and a means for branch prediction configured to provide a disambiguation indicator associated with the block of instructions to the processor, wherein the means for processing is configured to execute load instructions and/or store instructions in the block of instructions based on the disambiguation indicator indicating whether or not the load instructions and/or the store instructions in the block of instructions can bypass other instructions of the program or be bypassed by other instructions of the program.

In an aspect, a non-transitory computer-readable medium storing computer-executable code for preventing memory violations includes the computer-executable code comprising at least one instruction to cause a fetch unit of a processor to fetch, from an instruction cache, a block of instructions of a program to be executed by the processor, at least one instruction to cause the fetch unit to access, from a branch predictor of the processor, a disambiguation indicator associated with the block of instructions, and at least one instruction to cause the processor to execute load instructions and/or store instructions in the block of instructions based on the disambiguation indicator indicating whether or not the load instructions and/or the store instructions in the block of instructions can bypass other instructions of the program or be bypassed by other instructions of the program.

Other objects and advantages associated with the aspects disclosed herein will be apparent to those skilled in the art based on the accompanying drawings and detailed description.

### BRIEF DESCRIPTION OF THE DRAWINGS

A more complete appreciation of aspects of the disclosure will be readily obtained as the same becomes better understood by reference to the following detailed description when considered in connection with the accompanying drawings which are presented solely for illustration and not limitation of the disclosure, and in which:
FIG. 1 is a block diagram depicting a system according to at least one aspect of the disclosure.
FIG. 2 is a block diagram depicting an exemplary computer processor according to at least one aspect of the disclosure.
FIG. 3 illustrates an exemplary system for branch prediction and memory disambiguation prediction.
FIG. 4 illustrates an exemplary system for memory violation prediction according to at least one aspect of the disclosure.
FIG. 5 illustrates an exemplary flow for preventing memory violations according to at least one aspect of the disclosure.

### DETAILED DESCRIPTION

Disclosed are methods and apparatuses for preventing memory violations. In an aspect, a fetch unit accesses, from a branch predictor of a processor, a disambiguation indicator associated with a block of instructions of a program to be executed by the processor, and fetches, from an instruction cache, the block of instructions. The processor executes load instructions and/or store instructions in the block of instructions based on the disambiguation indicator indicating whether or not the load instructions and/or the store instructions in the block of instructions can bypass other instructions of the program or be bypassed by other instructions of the program.

These and other aspects of the disclosure are disclosed in the following description and related drawings directed to specific aspects of the disclosure. Alternate aspects may be devised without departing from the scope of the disclosure. Additionally, well-known elements of the disclosure will not be described in detail or will be omitted so as not to obscure the relevant details of the disclosure.

The words "exemplary" and/or "example" are used herein to mean "serving as an example, instance, or illustration." Any aspect described herein as "exemplary" and/or "example" is not necessarily to be construed as preferred or advantageous over other aspects. Likewise, the term "aspects of the disclosure" does not require that all aspects of the disclosure include the discussed feature, advantage or mode of operation.

Further, many aspects are described in terms of sequences of actions to be performed by, for example, elements of a computing device. It will be recognized that various actions described herein can be performed by specific circuits (e.g., application specific integrated circuits (ASICs)), by program instructions being executed by one or more processors, or by a combination of both. Additionally, these sequence of actions described herein can be considered to be embodied entirely within any form of computer readable storage medium having stored therein a corresponding set of computer instructions that upon execution would cause an associated processor to perform the functionality described herein. Thus, the various aspects of the disclosure may be embodied in a number of different forms, all of which have been contemplated to be within the scope of the claimed subject matter. In addition, for each of the aspects described herein, the corresponding form of any such aspects may be described herein as, for example, "logic configured to" perform the described action.

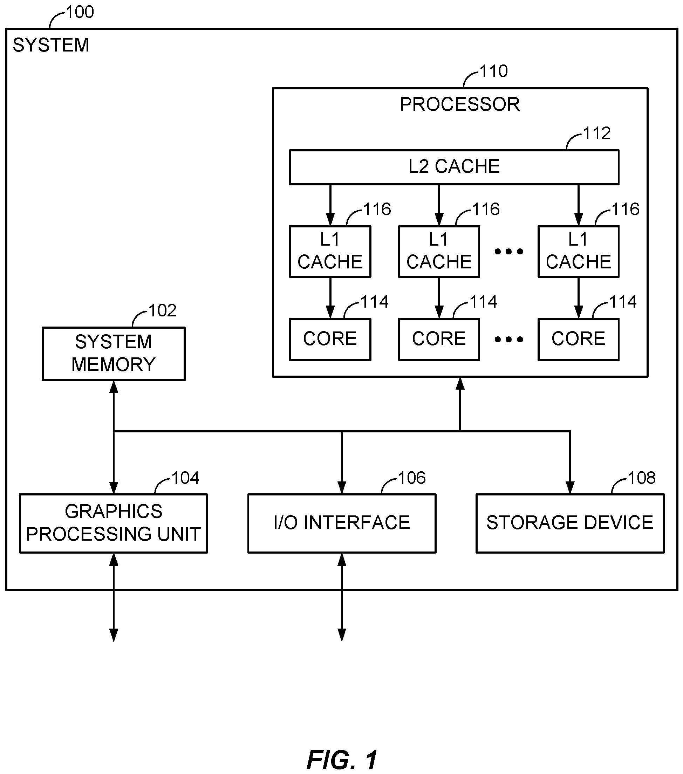

FIG. 1 is a block diagram depicting a system 100 according to at least one aspect of the disclosure. The system 100 may be any computing device, such as a cellular telephone, a personal digital assistant (PDA), a pager, a laptop computer, a tablet computer, a desktop computer, a server computer, a compact flash device, an external or internal modem, a wireless or wireline phone, and so on.

The system 100 may contain a system memory 102 for storing instructions and data, a graphics processing unit 104 for graphics processing, an input/output (I/O) interface for communicating with external devices, a storage device 108 for long term storage of instructions and data, and a processor 110 for processing instructions and data. The processor 110 may have an L2 cache 112 as well as multiple L1 caches 116, with each L1 cache 116 being utilized by one of multiple processor cores 114.

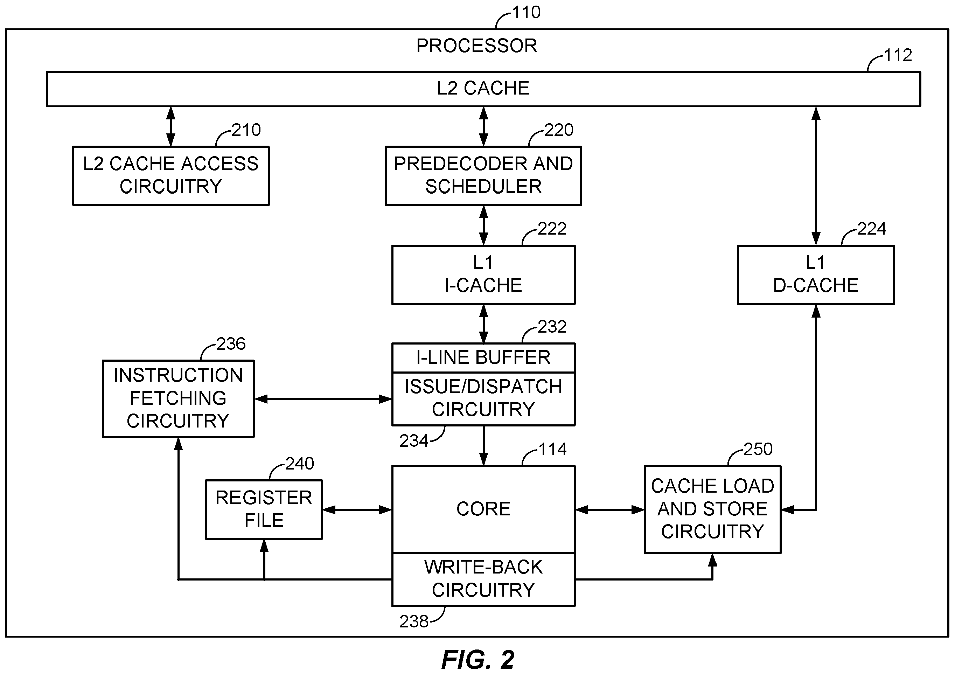

FIG. 2 is a block diagram depicting the processor 110 of FIG. 1 in greater detail. For simplicity, FIG. 2 depicts and is described with respect to a single core 114 of the processor 110.

The L2 cache 112 may contain a portion of the instructions and data being used by the processor 110. As shown in FIG. 2, the L1 cache 116 may be divided into two parts, an L1 instruction cache 222 (I-cache 222) for storing I-lines and an L1 data cache 224 (D-cache 224) for storing D-lines. L2 cache access circuitry 210 can fetch groups of instructions from the L2 cache 112. I-lines retrieved from the L2 cache 112 may be processed by a predecoder and scheduler 220 and placed into the I-cache 222. To further improve performance of the processor 110, instructions are often predecoded when, for example, I-lines are retrieved from the L2 cache 112 (or higher). Such predecoding may include various functions, such as address generation, branch prediction, and scheduling (determining an order in which the instructions should be issued), which is captured as dispatch information (a set of flags) that control instruction execution.

Instruction fetching circuitry 236 may be used to fetch instructions for the core 114. For example, the instruction fetching circuitry 236 may contain a program counter that tracks the current instructions being executed in the core 114. A branch unit (not shown) within the core 114 may be used to change the program counter when a branch instruction is encountered. An I-line buffer 232 may be used to store instructions fetched from the L1 I-cache 222. The issue and dispatch circuitry 234 may be used to group instructions in the I-line buffer 232 into instruction groups that are then issued in parallel to the core 114. In some cases, the issue and dispatch circuitry 234 may use information provided by the predecoder and scheduler 220 to form appropriate instruction groups.

In addition to receiving instructions from the issue and dispatch circuitry 234, the core 114 may receive data from a variety of locations. Where the core 114 requires data from a data register, a register file 240 may be used to obtain data. Where the core 114 requires data from a memory location, cache load and store circuitry 250 may be used to load data from the D-cache 224. Where such a load is performed, a request for the required data may be issued to the D-cache 224. If the D-cache 224 does not contain the desired data, a request for the desired data may be issued to the L2 cache 112 (e.g., using the L2 access circuitry 210).

In some cases, data may be modified in the core 114. Modified data may be written to the register file 240, or stored in memory. Write-back circuitry 238 may write data back to the register file 240, or may utilize the cache load and store circuitry 250 to write data back to the D-cache 224. Optionally, the core 114 may access the cache load and store circuitry 250 directly to perform stores. In some cases, the write-back circuitry 238 may also be used to write instructions back to the I-cache 222.

Processor 110 may utilize instruction level parallelism (ILP) to improve application performance. Out-of-order execution is a frequently utilized technique to exploit ILP. In out-of-order execution, instructions that are ready to execute are identified and executed, often out of the program order as specified by the von-Neumann programing model. This can result in memory operations, such as loads and stores, to be executed in an out-of-order fashion.

For example, a store instruction may be executed that stores data to a particular memory address, but due to latency in executing different instruction groups of the program out-of-order, the stored data may not be immediately available for a "younger" dependent load instruction. Thus, if a younger load instruction that loads data from the same memory address is executed shortly after the "older" store instruction, the younger load instruction may receive data from the L1 cache 116 before the L1 cache 116 is updated with the results of the older store instruction, causing a memory violation. Similar issues arise with store-store and load-load instruction ordering.

Table 1 illustrates examples of two common instruction ordering violations.

**Table 1**

| **Example** | **Explanation** |
|---|---|
| At time 0, MEM[A]=Data0 | If Load A (Inst18) executed at time 10 |
| | AND |
| Inst10: MEM[A] ← Datal (Store A) | Store A (Inst10) executed at time 20, |
| | THEN |
| Inst18: R15 ← MEM[A] (Load A) | R15 would incorrectly have Data0 instead of Datal. |
| | This is a Store-Load dependency violation. |
| At time 0, MEM[A]=Data0 | If Inst18 executed at time 10 and got Data0, |
| | AND |
| Processor 1: | Inst10 executed at time 10 (address computation dependency delays address determination) to get |
| Inst10: R12 ← MEM[A] (Load A) | |
| | Data1 (due to coherence reasons), |
| Inst18: R15 ← MEM[A] (Load A) | THEN |
| | Inst18 (load) should also have Datal instead of Data0. |
| Processor 2: | This is a Load coherence dependence violation. |
| Mem[A] ← Datal (Store A) | |

Memory violations produce functional failures that need to be addressed. Typically, the younger load instruction should have waited for the address(es) of previous memory operation(s) to resolve before it started execution. Because it did not, this load instruction and all its dependent instructions have to be re-evaluated to maintain functionality. Such error-causing younger load instructions are treated as precise faults, where the machine state is recovered at the boundary of the younger load, and the processor 110 restarts fetching instructions from the younger load that is to be re-executed. As with any precise fault (like branch misprediction), there is a high performance and power penalty associated with such memory violations.

To address such memory violations, many processors utilize load and store queues that maintain ages of the loads and stores. Load instructions check the store queue to identify the youngest older store that has an address overlap. If there is an overlap, the store instruction forwards data to the load instruction to ensure functionality. If there is no overlap, then the load instruction proceeds to load data from the data caches (e.g., L1 cache 116, L2 cache 112, etc.).

If there is any older store instruction whose target address has not been resolved yet, the load instruction has to decide if it is dependent on this unresolved store instruction. This is commonly known as memory disambiguation. Current methods for performing memory disambiguation include:
1. Always block on unknown store addresses.
2. Always bypass - assume that none of the unresolved store instructions forward to the load instruction.
3. Predict that a load instruction, based on its instruction address or other uniqueness, will not be dependent on any unresolved store instruction based on the history of that load instruction.
4. Predict that a particular store instruction, based on its instruction address or other uniqueness, never forwards to any load instruction that executed earlier than the store instruction itself. Therefore, any younger load instruction can bypass this store instruction if its address is unknown.

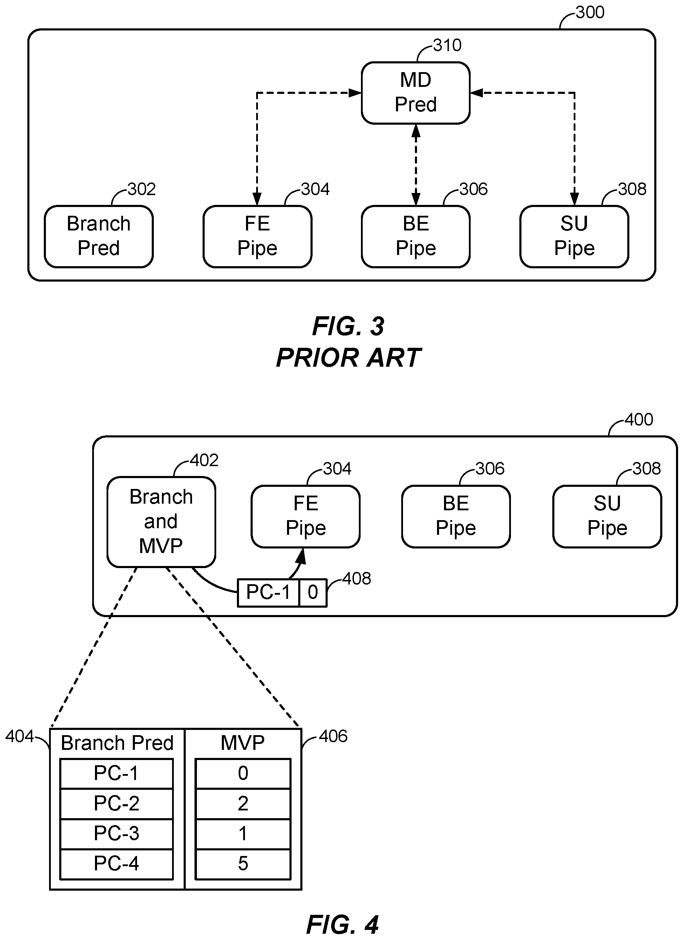

FIG. 3 illustrates an exemplary conventional system 300 for branch prediction and memory disambiguation prediction. The system 300 includes a branch predictor 302, a front end (FE) pipe 304, a back end (BE) pipe 306, a load/store (SU) pipe 308, and a memory disambiguation (MD) predictor 310. The branch predictor 302 may be part of the "front-end" and provides the next instruction address to the fetch unit (e.g., instruction fetching circuitry 236). The branch predictor 302, the memory disambiguation predictor 310, the front end pipe 304, the back end pipe 306, and the load/store pipe 308 may be components of the core 114.

In system 300, the branch predictor 302 sends the next program counter (PC) to the front end pipe 304 in the core 114. The memory disambiguation predictor 310 may send its prediction of whether a load and/or store instruction being executed is dependent on an unresolved load and/or store instruction to any or all of the front end pipe 304, the back end pipe 306, and the load/store pipe 308.

The present disclosure presents a methodology for memory disambiguation that integrates disambiguation prediction with branch prediction. For simplicity, this combined prediction methodology is referred to herein as "memory violation prediction."

FIG. 4 illustrates an exemplary system 400 for memory violation prediction according to at least one aspect of the disclosure. The system 400 includes a branch and memory violation predictor (MVP) 402, a front end (FE) pipe 304, a back end (BE) pipe 306, and a load/store (SU) pipe 308. The branch and memory violation predictor 402 may be a component of the instruction fetching circuitry 236 in FIG. 2, while the front end pipe 304, the back end pipe 306, and the load/store pipe 308 may be components of the core 114.

The branch and memory violation predictor 402 includes a branch predictor 404 and a memory violation predictor 406. The branch predictor 404 and the memory violation predictor 406 store a PC and a memory violation predictor code (also referred to herein as a "disambiguation indicator"), respectively. The branch and memory violation predictor 402 sends the next PC from the branch predictor 404 and the memory violation predictor code from the memory violation predictor 406 as entry 408 (e.g., one or more bits representing the PC and the memory violation predictor code) to the front end pipe 304. The entry 408 is also passed to the back end pipe 306 and the load/store pipe 308.

In the present disclosure, for simplicity, it is assumed that the branch predictor 404 is a decoupled branch predictor, but the branch predictor 404 may instead be a coupled branch predictor without changing the operation of the memory violation prediction disclosed herein. The coupling of a branch predictor is with the fetch pipeline. In a coupled pipeline, it tends to proceed in a request-response type of relationship, whereas in a decoupled branch predictor, such as branch predictor 404, the relationship is more of a producer-consumer type with some back pressure mechanism. A decoupled branch predictor continues to generate the possible next fetch group address based on the current fetch group address. A fetch group address is the first address of a contiguous block of instructions and is pointed to by the PC. This can be a part of the instruction cache's cache line (e.g., as in an ARM-like model) or a block of instructions (e.g., as in a block-based ISA such as E2).

As shown in FIG. 4, the memory violation predictor 406 enhances the entries from the branch predictor 404 by adding a disambiguation indicator (i.e., the memory violation predictor code) to the PC sent to the front end pipe 304 as entry 408. The disambiguation indicator in entry 408 will be valid for all load instructions and/or store instructions within the block of instructions fetched based on the PC. The disambiguation indicator provides a historical context to the disambiguation prediction and avoids blocking load instructions when not needed. That is, if blocking load instructions in a block of instructions did not behave as expected, the memory violation predictor can change the prediction of how load instructions in that block of instructions should be executed. This provides a finer disambiguation prediction for load instructions and can improve performance without increasing load mispredictions.

Such a historical context may be useful for disambiguation when the younger load instruction (that faults due to its early execution) is in a different control domain than the older store or load instruction. A variety of factors, like existence, location, and resolution time of the older instruction, determine the possibility of a violation, and branch context (provided by the branch predictor 404) helps to narrow the context when the younger load instruction would actually fault by passing unresolved older memory operations.

The memory violation predictor 406 uses the current instruction fetch group address to access the branch predictor 404, and along with the direction and/or target prediction provided by the branch predictor 404, the updated branch prediction provides information about the possibility of a memory violation in the current block of instructions (whose address is used to lookup the branch prediction). More specifically, a branch can have different outcomes depending on how one or more previous branches were executed / resolved. As such, there may be multiple entries in the branch predictor 404 for the same block of instructions corresponding to how the branch(es) in the current block of instructions are correlated with previous branch outcomes. The same block of instructions could have multiple successors depending on the branch instructions before it. Similarly, there may also be multiple disambiguation indicators for the same block of instructions, where each disambiguation indicator corresponds to an entry in the branch predictor 404 for the block of instructions. For example, for a given block of instructions, if there are two entries in the branch predictor 404, there may be two corresponding disambiguation indicators in the memory violation predictor 406, one for each entry in the branch predictor 404. As the block of instructions is decoded, any load and/or store instructions inside the block of instructions will follow the memory disambiguation prediction as provided by the updated branch predictor for those load and/or store instructions. Thus, the memory violation predictor of the present disclosure permits multiple different disambiguation predictions for the same block of instructions, i.e., for the same static branch PC. Therefore, depending on how the program execution reached a given branch PC, the memory violation predictor may choose one disambiguation code over another.

Note that in the above discussion, the branch predictor 404 is not indexed only by the PC. Rather, as described above, it is a combination of the PC and historical context. However, even without historical context, the branch predictor 404 will still provide a prediction.

The memory violation predictor 406 can provide one or more bits of state to indicate the disambiguation prediction(s) for a block of instructions. These can be, but are not limited to, the disambiguation indicators / memory violation predictor code illustrated in Table 2. The initial value of a disambiguation indicator can be any of these states depending on the conservativeness of the design. Note that the encodings in Table 2 are merely exemplary. Much greater (or lesser) detail can be expressed in terms of the behavior and interactions between memory instructions in the block of instructions in each prediction's scope.

**Table 2**

| **Disambiguation Indicator / Memory Violation Predictor Code** | **Meaning** |
|---|---|
| 0 | No dependence between load and store instructions in the block of instructions expected; unblock all instructions in the block of instructions |
| 1 | Load instructions in the block of instructions block (i.e., wait to execute) on all older unknown store instructions (i.e., store instructions that have not been resolved) only |
| 2 | Load instructions in the block of instructions block on all older unknown load instructions (i.e., load instructions that have not been resolved) only |
| 3 | Load instructions in the block of instructions cannot bypass unknown store instructions or unknown load instructions |
| 4 | Only store instructions in the block of instructions will be marked as non-bypassable (i.e., cannot be bypassed) when they are not resolved (i.e., the involved memory address has not yet been updated by the store instruction) |
| 5 | Only load instructions in the block of instructions will be marked as non-bypassable when they are not resolved (i.e., the involved memory address has not yet been updated by the load instruction) |
| 6 | All load and store instructions in the block of instructions will be marked as non-bypassable when they are not resolved |

The disambiguation indicator in entry 408 applies to all load and store instructions in the block of instructions. That is, all load and store instructions in the block of instructions are marked with the disambiguation indicator for that block of instructions. The disambiguation indicator indicates whether execution of any store and/or load instructions within the block of instructions previously resulted in a memory violation. Thus, in this style of memory disambiguation, the memory dependence behavior is described across a block of instructions, as opposed to expressed per individual memory instruction (e.g., loads and stores). This permits this group behavior to be expressed very early in the pipeline (even before the loads and stores in the block of instructions influenced by the prediction have been decoded).

Note that the older conflicting load and/or store instruction(s) (whose lack of resolution before execution of the load and/or store instruction(s) in the current block of instructions caused the memory violation) need not be in the same/current block of instructions. Rather, the older conflicting load and/or store instruction(s) may have been executed in one or more previous blocks of instructions.

Additionally, the memory violation predictor 406 need not know whether a block of instructions contains load and/or store instructions. Rather, when a block of instructions is executed for the first time, the memory violation predictor 406 may simply assign an initial / default value to the disambiguation indicator for that block of instructions. The disambiguation indicator may then be updated depending on whether execution of that block of instructions results in a memory violation. The next time the block of instructions is retrieved, the updated disambiguation indicator will be more reflective of how the block of instructions should be executed (e.g., as indicated by the disambiguation indicators in Table 2) to prevent memory violations.

Further, each time the block of instructions completes execution, the memory violation predictor 406 will be updated with that block of instructions' disambiguation state (e.g., 0, 1, 2, or 3 from Table 2). There can also be additional updates when a disambiguation flush occurs in the machine to update the corresponding entry in the memory violation predictor 402.

The disambiguation indicator can be manipulated either as a sticky entry (e.g., once set, it does not change for a particular block of instructions), as a linear threshold (e.g., greater than a threshold value will disable disambiguation), as a hysteresis threshold (e.g., ramps up quickly to disable, comes down slowly to re-enable), or the like.

How a block of instructions resolves with respect to memory operations may cause a different disambiguation indicator (e.g., as described in Table 2) to be chosen for the block of instructions. Specifically, a branch queue entry, corresponding to a block of instructions, may hold the memory violation status of the block of instructions. If there is a memory violation, the corresponding branch queue entry can be updated with an appropriate resolution. The disambiguation indicator (or memory violation predictor code) depends on the type of violation. For example, if a store instruction invalidates multiple load instructions, the disambiguation indicator for the block of instructions including the store instruction may be set to memory violation predictor code 4 (from Table 2). If, however, there was only one load instruction, then the disambiguation indicator for the block of instructions including the store instruction is set to memory violation predictor code 1. The disambiguation indicator of a block of instructions can be updated to a different memory violation predictor code. For example, where one store instruction flushes multiple load instructions, and if the disambiguation indicator for one of the blocks of instructions including one of the load instructions is set to memory violation predictor code 1, the disambiguation indicator of blocks of instructions including store instructions could be set to memory violation predictor code 4 and the disambiguation indicator of blocks of instructions including load instructions could be cleared. Alternatively, if the disambiguation indicator of a block of instructions was set to memory violation predictor code 4 and a memory violation is detected where an older load instruction flushes a younger load instruction, the disambiguation indicator for that block of instructions may be updated to a more restrictive memory violation predictor code 6.

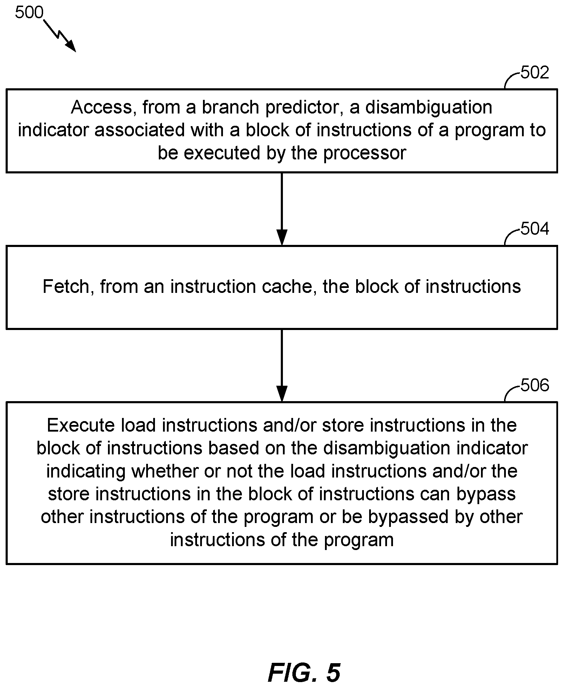

FIG. 5 illustrates an exemplary flow 500 for preventing memory violations according to at least one aspect of the disclosure.

At 502, a fetch unit, such as instruction fetching circuitry 236 in FIG. 2, accesses, from a branch predictor, such as branch and memory violation predictor 402 in FIG. 4, a disambiguation indicator, such as the disambiguation indicator in entry 408 in FIG. 4, associated with a block of instructions of a program to be executed by a processor, such as core 114 in FIG. 2. Alternatively, the branch predictor provides the disambiguation indicator associated with the block of instructions to the processor. In an aspect, the disambiguation indicator may be a multiple-bit field associated with each block of instructions of the program being executed. At 504, the fetch unit fetches, from an instruction cache, such as L1 I-cache 222 in FIG. 2, the block of instructions.

At 506, the processor executes load instructions and/or store instructions in the block of instructions based on the disambiguation indicator indicating whether or not load instructions and/or store instructions in the block of instructions can bypass other instructions of the program or be bypassed by other instructions of the program.

In an aspect, the block of instructions may be associated with a plurality of entries in the branch predictor, each entry of the plurality of entries in the branch predictor corresponding to a branch in the block of instructions (thereby providing a historical context for the block of insructions). In that case, each entry of the plurality of entries in the branch predictor may have a corresponding disambiguation indicator representing how load instructions and store instructions in the block of instructions should be executed for the branch in the block of instructions.

In an aspect, the disambiguation indicator indicating whether or not the load instructions and/or the store instructions in the block of instructions can bypass other instructions of the program or be bypassed by other instructions of the program may include the disambiguation indicator indicating that all the load instructions in the block of instructions should be blocked from executing until unknown store instructions have been resolved, as shown in Table 2 as disambiguation indicator "1." In that case, the executing at 506 may include blocking all the load instructions in the block of instructions from executing until the unknown store instructions have been resolved. "Unknown" store instructions may be store instructions where the target memory address(es) of the unknown store instructions are unknown until the unknown store instructions are resolved. The unknown store instructions may precede any load instructions in the block of instructions in the program execution order.

In an aspect, the disambiguation indicator indicating whether or not the load instructions and/or the store instructions in the block of instructions can bypass other instructions of the program or be bypassed by other instructions of the program may include the disambiguation indicator indicating that all the load instructions in the block of instructions should be blocked from executing until unknown load instructions have been resolved, as shown in Table 2 as disambiguation indicator "2." In that case, the executing at 506 may include blocking all load instructions in the block of instructions from executing until the unknown load instructions have been resolved. "Unknown" load instructions may be load instructions where the target memory addresses of the unknown load instructions are unknown until the unknown load instructions are resolved. The unknown load instructions may precede any load instructions in the block of instructions in the program execution order.

In an aspect, the disambiguation indicator indicating whether or not the load instructions and/or the store instructions in the block of instructions can bypass other instructions of the program or be bypassed by other instructions of the program may include the disambiguation indicator indicating that all the load instructions in the block of instructions should be blocked from executing until unknown store instructions and unknown load instructions have been resolved, as shown in Table 2 as disambiguation indicator "3." In that case, the executing at 506 may include blocking all load instructions in the block of instructions from executing until the unknown store instructions have been resolved and blocking all load instructions in the block of instructions from executing until the unknown load instructions have been resolved.

In an aspect, the disambiguation indicator indicating whether or not the load instructions and/or the store instructions in the block of instructions can bypass other instructions of the program or be bypassed by other instructions of the program may include the disambiguation indicator indicating that all unknown store instructions in the block of instructions should be marked as non-bypassable, as shown in Table 2 as disambiguation indicator "4." In that case, the executing at 506 may include waiting to execute other instructions of the program until all the unknown store instructions in the block of instructions have been resolved.

In an aspect, the disambiguation indicator indicating whether or not the load instructions and/or the store instructions in the block of instructions can bypass other instructions of the program or be bypassed by other instructions of the program may include the disambiguation indicator indicating that all unknown load instructions in the block of instructions should be marked as non-bypassable, as shown in Table 2 as disambiguation indicator "5." In that case, the executing at 506 may include waiting to execute other instructions of the program until all unknown load instructions in the block of instructions have been resolved.

In an aspect, the disambiguation indicator indicating whether or not the load instructions and/or the store instructions in the block of instructions can bypass other instructions of the program or be bypassed by other instructions of the program may include the disambiguation indicator indicating that all unknown store instructions and all unknown load instructions in the block of instructions should be marked as non-bypassable, as shown in Table 2 as disambiguation indicator "6." In that case, the executing at 506 may include waiting to execute other instructions of the program until all the unknown store instructions in the block of instructions and all the unknown load instructions in the block of instructions have been resolved.

Although not illustrated in FIG. 5, the flow 500 may further include setting (e.g., by the branch predictor) the disambiguation indicator to a default value before the block of instructions is executed a first time. In that case, the flow 500 may further include updating the disambiguation indicator based on a load instruction or a store instruction in the block of instructions causing a memory violation during execution of the block of instructions.

Those of skill in the art will appreciate that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

Further, those of skill in the art will appreciate that the various illustrative logical blocks, modules, circuits, and algorithm steps described in connection with the aspects disclosed herein may be implemented as electronic hardware, computer software, or combinations of both. To clearly illustrate this interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present disclosure.

The various illustrative logical blocks, modules, and circuits described in connection with the aspects disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The methods, sequences and/or algorithms described in connection with the aspects disclosed herein may be embodied directly in hardware, in a software module executed by a processor, or in a combination of the two. A software module may reside in random access memory (RAM), flash memory, read-only memory (ROM), erasable programmable ROM (EPROM), electrically erasable programmable ROM (EEPROM), registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor.

In one or more exemplary aspects, the functions described may be implemented in hardware, software, firmware, or any combination thereof. If implemented in software, the functions may be stored on or transmitted over as one or more instructions or code on a computer-readable medium. Computer-readable media includes both computer storage media and communication media including any medium that facilitates transfer of a computer program from one place to another. A storage media may be any available media that can be accessed by a computer. By way of example, and not limitation, such computer-readable media can comprise RAM, ROM, EEPROM, CD-ROM or other optical disk storage, magnetic disk storage or other magnetic storage devices, or any other medium that can be used to carry or store desired program code in the form of instructions or data structures and that can be accessed by a computer. Also, any connection is properly termed a computer-readable medium.

While the foregoing disclosure shows illustrative aspects of the disclosure, it should be noted that various changes and modifications could be made herein without departing from the scope of the disclosure as defined by the appended claims. The functions, steps and/or actions of the method claims in accordance with the aspects of the disclosure described herein need not be performed in any particular order. Furthermore, although elements of the disclosure may be described or claimed in the singular, the plural is contemplated unless limitation to the singular is explicitly stated.

## Claims

1. A method for preventing memory violations, comprising:
accessing (502), by a fetch unit from a branch predictor of a processor, a disambiguation indicator associated with a block of instructions of a program to be executed by the processor;
fetching (504), by the fetch unit of the processor from an instruction cache, the block of instructions; and
executing (506), by the processor, load instructions and/or store instructions in the block of instructions based on the disambiguation indicator indicating whether or not the load instructions and/or the store instructions in the block of instructions can bypass other instructions of the program or be bypassed by other instructions of the program.

2. The method of claim 1, wherein the disambiguation indicator indicating whether or not the load instructions and/or the store instructions in the block of instructions can bypass other instructions of the program or be bypassed by other instructions of the program comprises the disambiguation indicator indicating that all the load instructions in the block of instructions should be blocked from executing until unknown store instructions have been resolved, and wherein the executing comprises blocking all the load instructions in the block of instructions from executing until the unknown store instructions have been resolved.

3. The method of claim 2, wherein the unknown store instructions comprise store instructions where target memory addresses of the unknown store instructions are unknown until the unknown store instructions are resolved, and
wherein the unknown store instructions precede any load instructions in the block of instructions in the program execution order.

4. The method of claim 1, wherein the disambiguation indicator indicating whether or not the load instructions and/or the store instructions in the block of instructions can bypass other instructions of the program or be bypassed by other instructions of the program comprises the disambiguation indicator indicating that all the load instructions in the block of instructions should be blocked from executing until unknown load instructions have been resolved, and wherein the executing comprises blocking all load instructions in the block of instructions from executing until the unknown load instructions have been resolved.

5. The method of claim 4, wherein the unknown load instructions comprise load instructions where target memory addresses of the unknown load instructions are unknown until the unknown load instructions are resolved, and
wherein the unknown load instructions precede any load instructions in the block of instructions in the program execution order.

6. The method of claim 1, wherein the disambiguation indicator indicating whether or not the load instructions and/or the store instructions in the block of instructions can bypass other instructions of the program or be bypassed by other instructions of the program comprises the disambiguation indicator indicating that all the load instructions in the block of instructions should be blocked from executing until unknown store instructions and unknown load instructions have been resolved, and
wherein the executing comprises:
blocking all load instructions in the block of instructions from executing until the unknown store instructions have been resolved, and
blocking all load instructions in the block of instructions from executing until the unknown load instructions have been resolved.

7. The method of claim 1, wherein the disambiguation indicator indicating whether or not the load instructions and/or the store instructions in the block of instructions can bypass other instructions of the program or be bypassed by other instructions of the program comprises the disambiguation indicator indicating that all unknown store instructions in the block of instructions should be marked as non-bypassable, and
wherein the executing comprises waiting to execute other instructions of the program until all the unknown store instructions in the block of instructions have been resolved.

8. The method of claim 1, wherein the disambiguation indicator indicating whether or not the load instructions and/or the store instructions in the block of instructions can bypass other instructions of the program or be bypassed by other instructions of the program comprises the disambiguation indicator indicating that all unknown load instructions in the block of instructions should be marked as non-bypassable, and
wherein the executing comprises waiting to execute other instructions of the program until all unknown load instructions in the block of instructions have been resolved.

9. The method of claim 1, wherein the disambiguation indicator indicating whether or not the load instructions and/or the store instructions in the block of instructions can bypass other instructions of the program or be bypassed by other instructions of the program comprises the disambiguation indicator indicating that all unknown store instructions and all unknown load instructions in the block of instructions should be marked as non-bypassable,
wherein the executing comprises:
waiting to execute other instructions of the program until all the unknown store instructions in the block of instructions have been resolved, and
waiting to execute other instructions of the program until all the unknown load instructions in the block of instructions have been resolved.

10. The method of claim 1, wherein the disambiguation indicator is a multiple-bit field associated with each block of instructions of the program being executed.

11. The method of claim 1, further comprising:
setting the disambiguation indicator to a default value before the block of instructions is executed a first time.

12. The method of claim 1, further comprising:
updating the disambiguation indicator based on a load instruction or a store instruction in the block of instructions causing a memory violation during execution of the block of instructions.

13. The method of claim 1, wherein the block of instructions is associated with a plurality of entries in the branch predictor, each entry of the plurality of entries in the branch predictor corresponding to a branch in the block of instructions, and
wherein each entry of the plurality of entries in the branch predictor has a corresponding disambiguation indicator representing how load instructions and store instructions in the block of instructions should be executed for the branch in the block of instructions.

14. A processor for preventing memory violations, comprising:
a means for processing;
a means for fetching configured to fetch, from an instruction cache, a block of instructions of a program to be executed by the processor; and
a means for branch prediction (404) configured to provide a disambiguation indicator associated with the block of instructions to the processor,
wherein the means for processing is configured to execute load instructions and/or store instructions in the block of instructions based on the disambiguation indicator indicating whether or not the load instructions and/or the store instructions in the block of instructions can bypass other instructions of the program or be bypassed by other instructions of the program.

15. A non-transitory computer-readable medium storing computer-executable code for preventing memory violations, the computer-executable code comprising:
at least one instruction to cause a fetch unit of a processor to fetch, from an instruction cache, a block of instructions of a program to be executed by the processor of claim 14;
at least one instruction to cause the fetch unit to access, from a branch predictor of the processor, a disambiguation indicator associated with the block of instructions; and
at least one instruction to cause the processor to execute load instructions and/or store instructions in the block of instructions based on the disambiguation indicator indicating whether or not the load instructions and/or the store instructions in the block of instructions can bypass other instructions of the program or be bypassed by other instructions of the program.

## Patentansprüche

1. Ein Verfahren zum Verhindern von Speicherverletzungen, aufweisend:
Zugreifen (502), durch eine Abrufeinheit von einem Verzweigungsprädiktor eines Prozessors, auf einen Disambiguierungsindikator, der mit einem Block von Befehlen eines durch den Prozessor auszuführenden Programms assoziiert ist,
Abrufen (504), durch die Abrufeinheit des Prozessors aus einem Befehlscache, des Blocks von Befehlen, und
Ausführen (506), durch den Prozessor, von Ladebefehlen und/oder Speicherbefehlen in dem Block von Befehlen basierend auf dem Disambiguierungsindikator, der angibt, ob die Ladebefehle und/oder die Speicherbefehle in dem Block von Befehlen andere Befehle des Programms übergehen können oder durch andere Befehle des Programms übergangen werden können.

2. Verfahren nach Anspruch 1, wobei das Angeben durch den Disambiguierungsindikator, ob die Ladebefehle und/oder die Speicherbefehle in dem Block von Befehlen andere Befehle des Programms übergehen können oder durch andere Befehle des Programms übergangen werden können, das Angeben durch den Disambiguierungsindikator, dass eine Ausführung aller Ladebefehle in dem Block von Befehlen blockiert werden soll, bis unbekannte Speicherbefehle gelöst wurden, aufweist, und wobei das Ausführen das Blockieren einer Ausführung aller Ladebefehle in dem Block von Befehlen, bis die unbekannten Speicherbefehle gelöst wurden, aufweist.

3. Verfahren nach Anspruch 2, wobei die unbekannten Speicherbefehle Speicherbefehle, wo Zielspeicheradressen der unbekannten Speicherbefehle unbekannt sind, bis die unbekannten Speicherbefehle gelöst sind, aufweisen, und
wobei die unbekannten Speicherbefehle Ladebefehlen in dem Block von Befehlen in der Programmausführungsreihenfolge vorangehen.

4. Verfahren nach Anspruch 1, wobei das Angeben durch den Disambiguierungsindikator, ob die Ladebefehle und/oder die Speicherbefehle in dem Block von Befehlen andere Befehle des Programms übergehen können oder durch andere Befehle des Programms übergangen werden können, das Angeben durch den Disambiguierungsindikator, dass eine Ausführung aller Ladebefehle in dem Block von Befehlen blockiert werden soll, bis unbekannte Ladebefehle gelöst wurden, aufweist und das Ausführen das Blockieren einer Ausführung aller Befehle in dem Block von Befehlen, bis die unbekannten Ladebefehle gelöst wurden, aufweist.

5. Verfahren nach Anspruch 4, wobei die unbekannten Ladebefehle Ladebefehle, wo Zielspeicheradressen der unbekannten Ladebefehle unbekannt sind, bis die unbekannten Ladebefehle gelöst wurden, aufweisen, und
wobei die unbekannten Ladebefehle Ladebefehlen in dem Block von Befehlen in der Programmausführungsreihenfolge vorangehen.

6. Verfahren nach Anspruch 1, wobei das Angeben durch den Disambiguierungsindikator, ob die Ladebefehle und/oder die Speicherbefehle in dem Block von Befehlen andere Befehle des Programms übergehen können oder durch andere Befehle des Programms übergangen werden können, das Angeben durch den Disambiguierungsindikator, dass eine Ausführung aller Ladebefehle in dem Block von Befehlen blockiert werden soll, bis unbekannte Speicherbefehle und unbekannte Ladebefehle gelöst wurden, aufweist und das Ausführen aufweist:
Blockieren einer Ausführung aller Ladebefehle in dem Block von Befehlen, bis die unbekannten Speicherbefehle gelöst wurden, und
Blockieren einer Ausführung aller Ladebefehle in dem Block von Befehlen, bis die unbekannten Ladebefehle gelöst wurden.

7. Verfahren nach Anspruch 1, wobei das Angeben durch den Disambiguierungsindikator, ob die Ladebefehle und/oder die Speicherbefehle in dem Block von Befehlen andere Befehle des Programms übergehen können oder durch andere Befehle des Programms übergangen werden können, das Angeben durch den Disambiguierungsindikator, dass alle unbekannten Speicherbefehle in dem Block von Befehlen als nicht-übergehbar markiert werden sollen, aufweist, und
wobei das Ausführen das Warten mit dem Ausführen anderer Befehle des Programms, bis alle unbekannten Speicherbefehle in dem Block von Befehlen gelöst wurden, aufweist.

8. Verfahren nach Anspruch 1, wobei das Angeben durch den Disambiguierungsindikator, ob die Ladebefehle und/oder die Speicherbefehle in dem Block von Befehlen andere Befehle des Programms übergehen können oder durch andere Befehle des Programms übergangen werden können, das Angeben durch den Disambiguierungsindikator, dass alle unbekannten Ladebefehle in dem Block von Befehlen als nicht-übergehbar markiert werden sollen, aufweist, und
wobei das Ausführen das Warten mit dem Ausführen anderer Befehle des Programms, bis alle unbekannten Ladebefehle in dem Block von Befehlen gelöst wurden, aufweist.

9. Verfahren nach Anspruch 1, wobei das Angeben durch den Disambiguierungsindikator, ob die Ladebefehle und/oder die Speicherbefehle in dem Block von Befehlen andere Befehle des Programms übergehen können oder durch andere Befehle des Programms übergangen werden können, das Angeben durch den Disambiguierungsindikator, dass alle unbekannten Speicherbefehle und alle unbekannten Ladebefehle in dem Block von Befehlen als nicht-übergehbar markiert werden sollen, aufweist und das Ausführen aufweist:
Warten mit dem Ausführen anderer Befehle des Programms, bis alle unbekannten Speicherbefehle in dem Block von Befehlen gelöst wurden, und
Warten mit dem Ausführen anderer Befehle des Programms, bis alle unbekannten Ladebefehle indem Block von Befehlen gelöst wurden.

10. Verfahren nach Anspruch 1, wobei der Disambiguierungsindikator ein Mehrbit-Feld ist, das mit jedem Block von Befehlen des ausgeführten Programms assoziiert ist.

11. Verfahren nach Anspruch 1, das weiterhin aufweist:
Setzen des Disambiguierungsindikators auf einen Standardwert, bevor der Block von Befehlen ein erstes Mal ausgeführt wird.

12. Verfahren nach Anspruch 1, das weiterhin aufweist:
Aktualisieren des Disambiguierungsindikators basierend auf einem Ladebefehl oder einem Speicherbefehl in dem Block von Befehlen, die eine Speicherverletzung während der Ausführung des Blocks von Befehlen verursachen.

13. Verfahren nach Anspruch 1, wobei der Block von Befehlen mit einer Vielzahl von Einträgen in dem Verzweigungsprädiktor assoziiert ist, wobei jeder Eintrag aus der Vielzahl von Einträgen in dem Verzweigungsprädiktor einer Verzweigung in dem Block von Befehlen entspricht, und
wobei jeder Eintrag aus der Vielzahl von Einträgen in dem Verzweigungsprädiktor einen entsprechenden Disambiguierungsindikator aufweist, der angibt, wie Ladebefehle und Speicherbefehle in dem Block von Befehlen für die Verzweigung in dem Block von Befehlen ausgeführt werden sollen.

14. Ein Prozessor zum Verhindern von Speicherverletzungen, aufweisend:
Mittel für eine Verarbeitung,
Mittel für ein Abrufen, die konfiguriert sind zum Abrufen, aus einem Befehlscache, eines Blocks von Befehlen eines durch den Prozessor auszuführenden Programms, und
Mittel für eine Verzweigungsprädiktion (404), die konfiguriert sind zum Vorsehen eines Disambiguierungsindikators, der mit dem Block von Befehlen assoziiert ist, zu dem Prozessor,
wobei die Mittel für eine Verarbeitung konfiguriert sind zum Ausführen von Ladebefehlen und/oder Speicherbefehlen in dem Block von Befehlen basierend darauf, dass der Disambiguierungsindikator angibt, ob die Ladebefehle und/oder die Speicherbefehle in dem Block von Befehlen andere Befehle des Programms übergehen können oder durch andere Befehle des Programms übergangen werden können.

15. Ein nicht-transitorisches, computerlesbares Medium mit einem darauf gespeicherten computerausführbaren Code zum Verhindern von Speicherverletzungen, wobei der computerausführbare Code aufweist:
wenigstens einen Befehl, der veranlasst, dass eine Abrufeinheit eines Prozessors aus einem Befehlscache einen Block von Befehlen eines durch den Prozessor von Anspruch 14 auszuführenden Programms abruft,
wenigstens einen Befehl, der veranlasst, dass die Abrufeinheit, von einem Verzweigungsprädiktor des Prozessors, auf einen Disambiguierungsindikator, der mit dem Block von Befehlen assoziiert ist, zugreift, und
wenigstens einen Befehl, der veranlasst, dass der Prozessor Ladebefehle und/oder Speicherbefehle in dem Block von Befehlen basierend darauf ausführt, dass der Disambiguierungsindikator angibt, ob die Ladebefehle und/oder die Speicherbefehle in dem Block von Befehlen andere Befehle des Programms übergehen können oder durch andere Befehle des Programms übergangen werden können.

## Revendications

1. Procédé pour empêcher des violations de mémoire, comprenant les étapes consistant à :
accéder (502), par une unité d'extraction à partir d'un prédicteur de branche d'un processeur, à un indicateur de désambiguïsation associé à un bloc d'instructions d'un programme à exécuter par le processeur ;
extraire (504), par l'unité d'extraction du processeur à partir d'un cache d'instructions, le bloc d'instructions ; et
exécuter (506), par le processeur, des instructions de chargement et/ou des instructions de stockage dans le bloc d'instructions sur la base de l'indication par l'indicateur de désambiguïsation si ou non les instructions de chargement et/ou les instructions de stockage dans le bloc d'instructions peuvent contourner d'autres instructions du programme ou être contournées par d'autres instructions du programme.

2. Procédé selon la revendication 1, dans lequel l'indication par l'indicateur de désambiguïsation si oui ou non les instructions de chargement et/ou les instructions de stockage dans le bloc d'instructions peuvent contourner d'autres instructions du programme ou être contournées par d'autres instructions du programme comprend l'indication par l'indicateur de désambiguïsation que l'exécution de toutes les instructions de chargement dans le bloc d'instructions doit être bloquée jusqu'à ce que les instructions de stockage inconnues aient été résolues, et dans lequel l'exécution comprend le blocage de l'exécution de toutes les instructions de chargement dans le bloc d'instructions jusqu'à ce que les instructions de stockage inconnues aient été résolues.

3. Procédé selon la revendication 2, dans lequel les instructions de stockage inconnues comprennent des instructions de stockage où les adresses de mémoire cible des instructions de stockage inconnues sont inconnues jusqu'à ce que les instructions de stockage inconnues soient résolues, et
dans lequel les instructions de stockage inconnues précèdent toutes les instructions de chargement dans le bloc d'instructions dans l'ordre d'exécution du programme.

4. Procédé selon la revendication 1, dans lequel l'indication par l'indicateur de désambiguïsation si oui ou non les instructions de chargement et/ou les instructions de stockage dans le bloc d'instructions peuvent contourner d'autres instructions du programme ou être contournées par d'autres instructions du programme comprend l'indication par l'indicateur de désambiguïsation que l'exécution de toutes les instructions de chargement dans le bloc d'instructions doit être bloquée jusqu'à ce que les instructions de chargement inconnues aient été résolues, et dans lequel l'exécution comprend le blocage de l'exécution de toutes les instructions de chargement dans le bloc d'instructions jusqu'à ce que les instructions de chargement inconnues aient été résolues.

5. Procédé selon la revendication 4, dans lequel les instructions de chargement inconnues comprennent des instructions de chargement où les adresses de mémoire cible des instructions de chargement inconnues sont inconnues jusqu'à ce que les instructions de chargement inconnues soient résolues, et
dans lequel les instructions de chargement inconnues précèdent toutes les instructions de chargement dans le bloc d'instructions dans l'ordre d'exécution du programme.

6. Procédé selon la revendication 1, dans lequel l'indication par l'indicateur de désambiguïsation si oui ou non les instructions de chargement et/ou les instructions de stockage dans le bloc d'instructions peuvent contourner d'autres instructions du programme ou être contournées par d'autres instructions du programme comprend l'indication par l'indicateur de désambiguïsation que l'exécution de toutes les instructions de chargement dans le bloc d'instructions doivent être bloquées jusqu'à ce que les instructions de stockage inconnues et les instructions de chargement inconnues aient été résolues, et
dans lequel l'exécution comprend :
le blocage de l'exécution de toutes les instructions de chargement dans le bloc d'instructions jusqu'à ce que les instructions de stockage inconnues ont été résolus, et
le blocage de l'exécution de toutes les instructions de chargement dans le bloc d'instructions jusqu'à ce que les instructions de chargement inconnues soient résolues.

7. Procédé selon la revendication 1, dans lequel l'indication par l'indicateur de désambiguïsation si oui ou non les instructions de chargement et/ou les instructions de stockage dans le bloc d'instructions peuvent contourner d'autres instructions du programme ou être contournées par d'autres instructions du programme comprend l'indication par l'indicateur de désambiguïsation que toutes les instructions de stockage inconnues dans le bloc d'instructions doivent être marquées comme non contournables, et
dans lequel l'exécution comprend l'attente pour exécuter d'autres instructions du programme jusqu'à ce que toutes les instructions de stockage inconnues dans le bloc d'instructions aient été résolues.

8. Procédé selon la revendication 1, dans lequel l'indication par l'indicateur de désambiguïsation si oui ou non les instructions de chargement et/ou les instructions de stockage dans le bloc d'instructions peuvent contourner d'autres instructions du programme ou être contournées par d'autres instructions du programme comprend l'indication par l'indicateur de désambiguïsation que toutes les instructions de chargement inconnues dans le bloc d'instructions doivent être marquées comme non contournables, et
dans lequel l'exécution comprend l'attente pour exécuter d'autres instructions du programme jusqu'à ce que toutes les instructions de chargement inconnues dans le bloc d'instructions aient été résolues.

9. Procédé selon la revendication 1, dans lequel l'indication par l'indicateur de désambiguïsation si ou non les instructions de chargement et/ou les instructions de stockage dans le bloc d'instructions peuvent contourner d'autres instructions du programme ou être contournées par d'autres instructions du programme comprend l'indication par l'indicateur de désambiguïsation que toutes les instructions de stockage inconnues et toutes les instructions de chargement inconnues dans le bloc d'instructions doivent être marquées comme non contournables, dans lequel l'exécution comprend les étapes consistant à :
attendre d'exécuter d'autres instructions du programme jusqu'à ce que les instructions de stockage inconnues dans le bloc d'instructions aient été résolues, et
attendre d'exécuter d'autres instructions du programme jusqu'à ce que toutes les instructions de chargement inconnues dans le bloc d'instructions aient été résolues.

10. Procédé selon la revendication 1, dans lequel l'indicateur de désambiguïsation est un champ à bits multiples associé à chaque bloc d'instructions du programme en cours d'exécution.

11. Procédé selon la revendication 1, comprenant en outre :
la définition de l'indicateur de désambiguïsation à une valeur par défaut avant que le bloc d'instructions ne soit exécuté une première fois.

12. Procédé selon la revendication 1, comprenant en outre :
la mise à jour de l'indicateur de désambiguïsation sur la base de la provocation d'une violation de mémoire de la part d'une instruction de chargement ou d'une instruction de stockage dans le bloc d'instructions lors de l'exécution du bloc d'instructions.

13. Procédé selon la revendication 1, dans lequel le bloc d'instructions est associées à une pluralité d'entrées dans le prédicteur de branche, chaque entrée parmi la pluralité d'entrées dans le prédicteur de branche correspondant à une branche dans le bloc d'instructions, et
dans lequel chaque entrée de la pluralité d'entrées dans le prédicteur de branche présente un indicateur de désambiguïsation correspondant représentant comment les instructions de chargement et de stockage des instructions dans le bloc d'instructions doivent être exécutées pour la branche dans le bloc d'instructions.

14. Processeur pour empêcher des violations de mémoire, comprenant :
un moyen de traitement ;
un moyen d'extraction configuré pour extraire, à partir d'un cache d'instructions, un bloc d'instructions d'un programme à exécuter par le processeur ; et
un moyen de prédiction de branche (404) configuré pour fournir un indicateur de désambiguïsation associé au bloc d'instructions au processeur,
dans lequel le moyen de traitement est configuré pour exécuter des instructions de chargement et/ou des instructions de stockage dans le bloc d'instructions sur la base de l'indication par l'indicateur de désambiguïsation si ou non les instructions de chargement et/ou les instructions de stockage dans le bloc d'instructions peuvent ou non contourner d'autres instructions du programme ou être contournées par d'autres instructions du programme.

15. Support non transitoire lisible par ordinateur stockant un code exécutable par ordinateur pour empêcher des violations de mémoire, le code exécutable par ordinateur comprenant :
au moins une instruction pour amener une unité d'extraction d'un processeur à extraire, à partir d'un cache d'instructions, un bloc d'instructions d'un programme à exécuter par le processeur de la revendication 14 ;
au moins une instruction pour amener l'unité d'extraction à accéder, à partir d'un prédicteur de branche du processeur, à un indicateur de désambiguïsation associé au bloc d'instructions ; et
au moins une instruction pour amener le processeur à exécuter des instructions de chargement et/ou des instructions de stockage dans le bloc d'instructions sur la base de l'indication par l'indicateur de désambiguïsation si ou non les instructions de chargement et/ou les instructions de stockage dans le bloc d'instructions peuvent contourner d'autres instructions du programme ou être contourné par d'autres instructions du programme.
